Europäisches Patentamt

European Patent Office

Office européen des brevets

(19)

(11) Veröffentlichungsnummer: 0 241 820
A2

# (12) EUROPÄISCHE PATENTANMELDUNG

(21) Anmeldenummer: 87104955.7

(22) Anmeldetag: 03.04.87

(51) Int. Cl.⁴: B 29 C 45/42

(30) Priorität: 18.04.86 DE 3613074

(43) Veröffentlichungstag der Anmeldung: 21.10.87
Patentblatt 87/43

(84) Benannte Vertragsstaaten: AT CH DE FR GB IT LI

(71) Anmelder: Battenfeld Maschinenfabriken GmbH,
Scheri 10 Postfach 1164/1165,
D-5882 Meinerzhagen 1 (DE)

(72) Erfinder: Hellmann, Dieter, Schlehdornweg 13,
D-8432 Beilngries (DE)

(74) Vertreter: Müller, Gerd et al, Patentanwälte
HEMMERICH-MÜLLER-GROSSE-POLLMEIER-MEY
Hammerstrasse 2, D-5900 Siegen 1 (DE)

(54) Spritzling-Entnahmevorrichtung für Spritzgiessmaschinen.

(57) Es wird eine Spritzling-Entnahmevorrichtung 1 für Spritzgießmaschinen geschaffen, die bei vermindertem Konstruktionsgewicht eine exakte Bewegungssteuerung des Spritzlinggreifers 7 gewährleistet. Bei ihr ist an einem parallel zur Betätigungsrichtung der Schließeinheit für das Spritzwerkzeug ausgerichteten Führungsbett 2 ein Schlitten 3 verfahrbar, der wiederum einen quer dazu verlaufenden Ausleger 4 mit einem
daran längsverfahrbaren Support 5 trägt, in dem ein verstellbares Hängeglied 6 sitzt, das am unteren Ende den Spritzlinggreifer 7 trägt, der wiederum um mindestens zwei jeweils rechtwinklig zueinander gerichtete Gelenke 8, 9, 10 relativ zum
Hängeglied 6 verstellbar ist. Außer dem Antrieb 11 für den
Schlitten 3 und dem Antrieb 12 für den Support 5 ist auch der
Antrieb 13 für das Hängeglied 6 auf dem Schlitten 3, und zwar
oberhalb des Führungsbettes 2 angeordnet, so daß dessen
Gewicht den Ausleger 4, den Support 5 und das Hängeglied 6
nicht belastet.

ACTORUM AG

0241820

## Spritzling-Entnahmevorrichtung für Spritzgießmaschinen

Die Erfindung betrifft eine Vorrichtung zur Spritzling-Entnahme aus dem geöffneten Spritzwerkzeug von Spritzgießmaschinen, bei welcher an einem parallel zur Betätigungsrichtung der Schließeinheit für das Spritzwerkzeug ausgerichteten Führungsbett ein Schlitten verfahrbar sitzt, der wiederum einen quer dazu verlaufenden Ausleger mit einem daran längs verfahrbaren Support trägt, in dem ein in Auf- und Abwärtsrichtung verstellbares Hängeglied sitzt, das am unteren Ende einen Spritzlinggreifer trägt, welcher wiederum um mindestens zwei jeweils rechtwinklig zueinander gerichtete Gelenke relativ zum Hängeglied verstellbar ist.

Bei Spritzling-Entnmahmevorrichtungen dieser Art ist es bekannt, den Antrieb zum Verfahren des Schlittens entlang dem Führungsbett, wie auch den Antrieb zum Verfahren des Supports entlang dem Ausleger auf dem Schlitten zu montieren und dabei die Energiezuführung zu diesen Antrieben über Energieführungs-Schleppvorrichtungen zu bewirken, die an den Schlitten angeschlossen sind und entlang dem Führungsbett für diesen entsprechend der jeweiligen Schlittenbewegung verlagert werden können.

Der Antrieb für die Auf- und Abwärtsbewegung des Hängegliedes, wie auch die Antriebe für das Öffnen und Schließen sowie das Verdrehen und Verschwenken des von diesem getra-

0241820

genen Spritzlinggreifers werden bei den bekannten Spritzling-Entnahmevorrichtungen hingegen von dem auf dem Ausleger
verfahrbaren Support für das Hängeglied aufgenommen.

Diese bekannte Ausgestaltung der Spritzling-Entnahmevorrichtungen ist nicht nur deshalb nachteilig, weil auch der Support mit entlang des Auslegers bewegbaren Energiezuführungs-Schleppvorrichtungen zusammenarbeiten muß. Vielmehr
wird der Ausleger nicht nur durch das Gewicht des Supports
und des von diesem getragenen Hängegliedes beansprucht,
sondern zusätzlich noch durch die vom Support bzw. vom Hängeglied getragenen Antriebe.

Um eine exakte Bewegungssteuerung des Spritzlinggreifers
relativ zur Schließeinheit bzw. zum Spritzwerkzeug der
Spritzgießmaschine bei frei progammierbarer Auslegung der
Spritzling-Entnahmevorrichtung zu gewährleisten ist es daher
bei den bekannten Spritzling-Entnahmevorrichtungen notwendig, eine entsprechend steife und damit baulich aufwendige
Auslegung aller zusammenarbeitenden Funktionseinheiten vorzusehen.

Die Erfindung bezweckt die Vermeidung dieser Unzulänglichkeiten. Es liegt ihr deshalb die Aufgabe zugrunde, eine
gattungsgemäße Spritzling-Entnahmevorrichtung zu schaffen,
die mit relativ geringem Konstruktionsgewicht erstellt werden kann, trotzdem aber eine sehr exakte Steuerbewegung des
Spritzlinggreifers relativ zur Schließeinheit bzw. zum
Spritzwerkzeug sicherstellt.

Gelöst wird diese Aufgabe erfindungsgemäß durch die Kennzeichnungsmerkmale des Anspruchs 1, nämlich dadurch, daß
außer dem Antrieb für den Schlitten und dem Antrieb für den
Support auch der Antrieb für das Hängeglied auf dem Schlitten oberhalb des Führungsbettes sitzt, daß dabei die Führung für den Support am Ausleger aus mindestens einer in dessen Längsrichtung verlaufenden, drehbaren Welle besteht, daß diese Welle einerseits mit dem Antrieb für das Hängeglied auf dem Schlitten gekuppelt ist und andererseits einen sich über ihre ganze Länge erstreckenden Mitnehmer aufweist, und daß im Support ausschließlich drehbar ein längs schiebbar aber drehfest mit dem Mitnehmer der Welle in Eingriff stehendes Übertragungselement gelagert ist, das mit einem Lineartrieb des Hängegliedes in ständiger Antriebsverbindung steht.

Vorteilhaft bei dieser Ausgestaltung ist, daß der Ausleger lediglich das Gewicht des Supports sowie das von diesem getragene Hängeglied aufzunehmen hat und daher entsprechend leichter gebaut werden kann. Nach Anspruch 2 erweist es sich als besonders vorteilhaft, wenn erfindungsgemäß das Übertragungselement aus mindestens einer Drehmomentbüchse besteht, die zugleich ein Längsführungselement für den Support auf der Welle bzw. am Ausleger bildet.

Weiterhin ist es nach der Erfindung zweckmäßig, wenn gemäß Anspruch 3 der drehantreibbare Teil der Büchse mit einem Ritzel verbunden ist, dieses vorzugsweise trägt, wobei das Ritzel mit einer Zahnstange am Hängeglied ständig in Eingriff steht, die vorzugsweise aus einem verschleißfesten Polyamid-Kunststoff mit relativ geringem Gewicht hergestellt werden kann.

Als besonders vorteilhaft kann es sich nach der Erfindung aber erweisen, wenn gemäß Anspruch 4 zwei parallele Wellen mit Übertragungselementen im Ausleger angeordnet sowie mit dem Support in Wirkverbindung gehalten sind. In diesem Falle bewährt es sich nach Anspruch 5 weiterhin, daß die beiden Wellen für Synchronbewegung mit dem Antrieb für das Hängeglied gekuppelt sind.

In besonders vorteilhafter Weise läßt sich die erfindungsgemäße Spritzling-Entnahmevorrichtung dadurch weiterbilden,
daß gemäß Anspruch 6 das Hängeglied aus zwei teleskopartig
zueinander relativ verschiebbaren Längenabschnitten besteht,
von denen jeder eine eigene Zahnstange trägt und wobei jede
Zahnstange mit einem Übertragungselement einer der beiden
Wellen in Eingriff steht.

Weitere Merkmale und Vorteile des Gegenstandes der Erfindung
werden an in der Zeichnung dargestellten Ausführungsbeispielen nachfolgend näher erläutert. Es zeigen

Figur 1   in vereinfachter räumlicher Ansichtsdarstellung den
          Grundaufbau einer Spritzling-Entnahmevorrichtung,

Figur 2   die Spritzling-Entnahmevorrichtung in Pfeilrichtung
          II der Fig. 1 gesehen

Figur 3   in größerem Maßstab einen Schnitt entlang der Linie
          III-III in Fig. 2 und

Figur 4   in vergrößerter Draufsichtdarstellung den in Fig. 2
          mit IV gekennzeichneten Teilbereich der Spritzling-
          Entnahmevorrichtung.

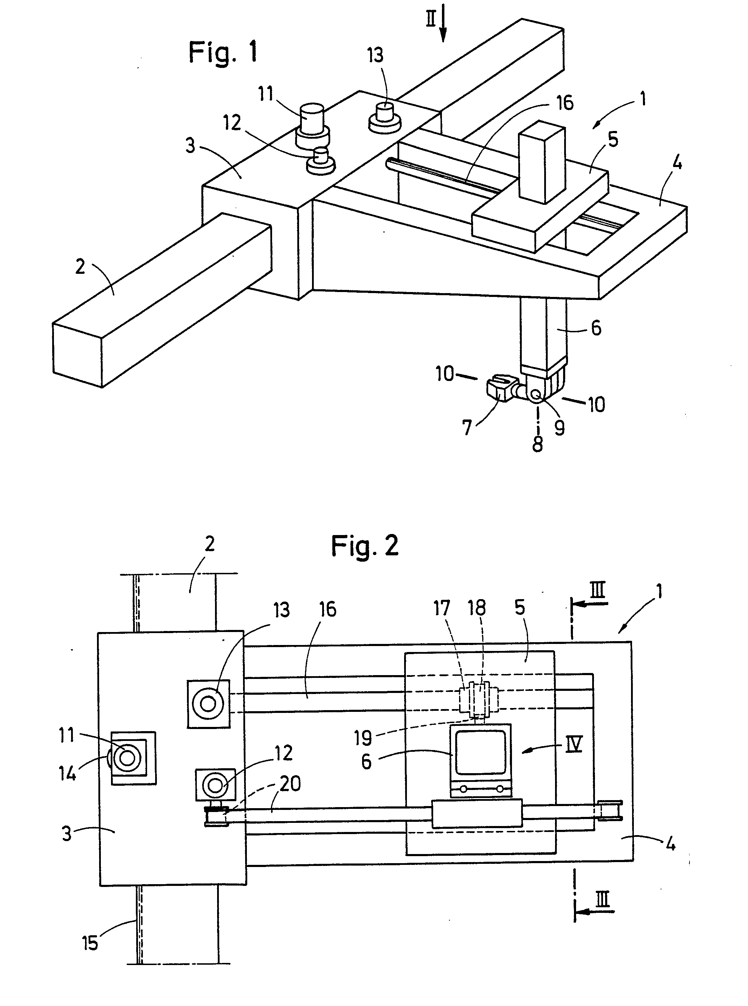

Die in Fig. 1 der Zeichnung dargestellte Spritzling-Entnahmevorrichtung 1 weist ein Führungbett 2 auf, welches bspw.
parallel zur Betätigungsrichtung der Schließeinheit für das
Spritzwerkzeug an einer Spritzgießmaschine montiert wird.
Längs des Führungsbettes 2 ist dabei ein Schlitten verfahrbar, der wiederum einen quer zum Führungsbett 2 gerichteten
Ausleger 4 als Kragarm trägt. Auf dem Ausleger 4 ist ein Support 5 längsverfahrbar angeordnet, der ein Hängeglied 6 hält, welches im Support 5 in Auf- und Abwärtsrichtung verfahrbar angeordnet ist.

Am unteren Ende des Hängegliedes 6 befindet sich ein Spritzlinggreifer 7, der einerseits um eine vertikale Achse 8 relativ zum Hängeglied 6 verstellbar ist, andererseits um eine horizontale Achse 9 relativ dazu verschwenkt werden kann und sich schließlich auch noch um eine Längsachse 10-10 verdrehen läßt.

Die Spritzling-Entnahmevorrichtung 1 nach Fig. 1 bildet also gewissermaßen einen Manipulator, welcher drei lineare Bewegungskoordinaten hat und dessen Spritzlinggreifer 7 darüber hinaus noch um drei weitere Gelenkachsen verlagert werden kann.

Ein wichtiges bauliches Ausbildungsmerkmal der Spritzling-Entnahmevorrichtung 1 liegt darin, daß nicht nur der Antrieb 11 für die Verschiebebewegung des Schlittens 3 entlang dem Führungsbett 2 und der Antrieb 12 zur Längsbewegung des Supports 5 auf dem Ausleger 4 oberhalb des Führungsbettes 2 auf dem Schlitten 3 sitzen, sondern auch noch der Antrieb 13, mit dessen Hilfe das Hängeglied 6 inm Vertikalrichtung relativ zum Support 5 gehoben und gesenkt werden kann.

Lediglich der Antrieb zum Öffnen und Schließen des Spritzlinggreifers 7 sowie die drei Antriebe zur Verlagerung desselben um die Gelenkachsen 8, 9 und 10 sind am und/oder im Hängeglied 6 selbst untergebracht. Da sie jedoch nur relativ geringe Stellkräfte zu erzeugen haben, können sie relativ leicht gebaut werden, so daß sie den Ausleger 4 über den Support 5 nicht wesentlich beanspruchen.

Während der Antrieb 11 für den Schlitten 3 unmittelbar über ein Ritzel 14 mit einer Verzahnung 15 am Führungsbett 2 zusammenwirkt, arbeitet der Antrieb 13 für den Support 5 auf einen Riemen- oder Kettentrieb 20, welcher in Längsrichtung des Auslegers 4 verlaufend eingebaut ist und der mit seinem einen Antriebstrum an den Support 5 angeschlossen ist. Selbstverständlich könnte anstelle des Riemen- oder Kettentriebes 20  auch ein Spindeltrieb treten.

Der Antrieb 13 für das Hängeglied 6 arbeitet auf mindestens eine Welle, die im Ausleger 4 parallel zu dessen Längsrichtung liegend gelagert ist. Die Welle 16 arbeitet dabei nach Art einer Leitspindel, also über einen sich über ihre ganze Länge erstreckenden Mitnehmer, mit einem als Drehmomentbüchse ausgebildeten Übertragungselement 17 zusammen. Dieses Übertragungselement 17 steht dabei drehfest, jedoch axial verschiebbar mit der Welle 16 in ständigem Eingriff, wobei ihr relativ zum Support 5 drehbares Teil ein Ritzel 18 trägt, das mit einer am Hängeglied 6 befestigten und in dessen Längsrichtung verlaufenden Zahnstange 19 in ständigem Eingriff steht.

Die Welle 16 bildet aber nicht nur ein Übertragungsmittel zur Erzeugung der Antriebsbewegung für das Hängeglied 6, sondern zugleich auch eine Längsführung für den Support 5 am Ausleger 4.

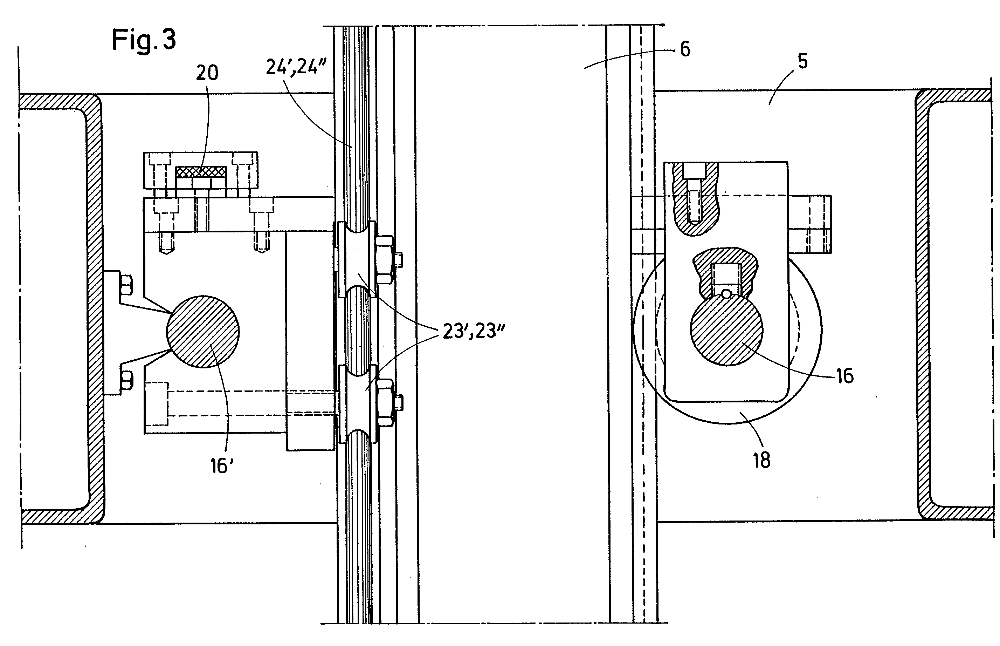

Aus Fig. 3 geht hervor, daß im Einbaubereich des Riemen-oder Kettenantriebs 20 parallel zur Welle 16 noch eine Welle 16' in den Ausleger 4 eingebaut werden kann, die ebenfalls mit dem Antrieb 13 in Verbindung steht und synchron zur Welle 16 bewegt wird. Auch diese Welle 16' arbeitet dabei, ebenso wie die Welle 16, über eine Büchse 17 mit dem Support 5 zusammen und bildet mithin eine weitere Längsführung für diesen. Das relativ zum Support drehbewegliche Teil dieses Übertragungselementes trägt dabei ebenfalls ein Ritzel 18, welches mit einer Zahnstange 19 kämmt, die am Hängeglied 6 befestigt ist. Wenn beide Wellen 16 und 16' auf ein einstückiges Hängeglied 6 einwirken, dann ist es natürlich notwendig, daß sie mit zueinander entgegengesetzten Drehrichtungen umlaufen. Wird hingegen das Hängeglied 6 aus zwei teleskopisch relativ zueinander verschiebbaren Längenabschnitten gebildet, dann können die beiden Wellen 16 und 16' mit übereinstimmender Drehrichtung arbeiten. Es wäre jedoch dann sinnvoll, die Antriebsübersetzung zwischen der zweiten Welle 16' und dem unteren Teleskopteil des Hängegliedes 6 größer, bspw. doppelt so groß, zu wählen, wie die Übersetzung zwischen der ersten Welle und dem oberen Teleskopteil des Hängegliedes 6. Es würde dann nämlich ein Differentialantrieb für das Hängeglied 6 geschaffen, der eine schnellere Heb- und Senkbewegung des Spritzlinggreifers 7 zulassen würde.

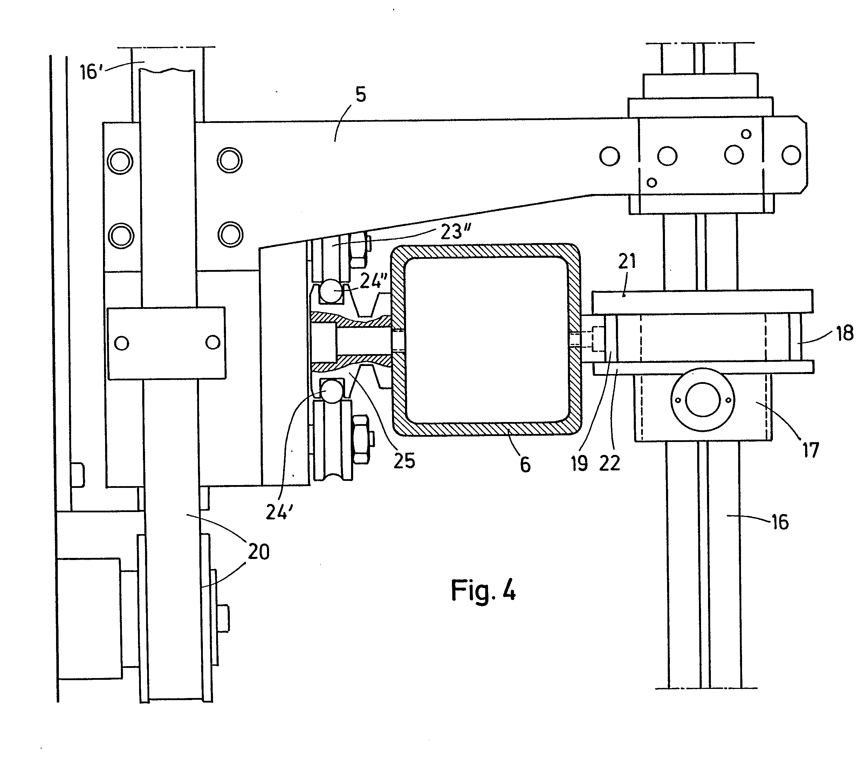

Aus den Fig. 3 und 4 ist noch entnehmbar, daß das Hängeglied 6 zweckmäßigerweise im Support 5 eine Dreifachführung erhält. Diese wird einerseits von der Zahnstange 19 gebildet, die mit beidseits des Ritzels 18 angeordneten Spurscheiben 21 und 22 zusammenarbeitet. Andererseits sind im Support 5 noch zwei Spurrollen-Paare 23' und 23'' drehbar gelagert, mit denen Führungsstangen 24', 24'' in Eingriff strehen, die wiederum durch Halteelemente 25 auf der ganzen Länge mit dem Hängeglied 6 in Verbindung stehen.

Es sei noch erwähnt, daß die als Übertragungselemente zwischen den Wellen 16 und 16', dem Support 5 und dem Hängeglied 6 benutzten Drehmomentbüchsen eine vorbekannte Bauart aufweisen. Bei ihnen läßt sich durch eine in einer Längsrille der Welle sitzende und in der Büchse gehaltene Kugel eine behinderungsfreie Axialverschiebung ermöglichen, wobei jedoch die in der Längsrille liegende Kugel beim Drehen der Welle einen Mitnahmeeffekt für einen Teil der Büchse bewirkt, der das Ritzel 18 bildet, welches mit der Zahnstange 19 aus verschleißfestem Polyamid kämmt.

Patentansprüche

1. Vorrichtung zur Spritzling-Entnahme aus dem geöffneten Spritzwerkzeug von Spritzgießmaschinen, bei welcher an einem, bspw. parallel zur Betätigungsrichtung der Schließeinheit für das Spritzwerkzeug ausgerichteten Führungsbett ein Schlitten verfahrbar sitzt, der wiederum einen quer dazu verlaufenden Ausleger mit einem daran längs verfahrbaren Support trägt, in dem ein verstellbares Hängeglied sitzt, das am unteren Ende einen Spritzlinggreifer trägt, welcher wiederum um mindestens zwei jeweils rechtwinklig zueinander gerichtete Gelenke relativ zum Hängeglied verstellbar ist,

d a d u r c h   g e k e n n z e i c h n e t ,

daß außer dem Antrieb (11) für den Schlitten (3) und dem Antrieb (12) für den Support (5) auch der Antrieb (13) für das Hängeglied (6) auf dem Schlitten (3) oberhalb des Führungsbettes (2) sitzt,

daß dabei die Führung für den Support (5) am Ausleger (4) aus mindestens einer in dessen Längsrichtung verlaufenden, drehbaren Welle (16) besteht,

daß diese Welle (16) einerseits mit dem Antrieb (13) für das Hängeglied (9) auf dem Schlitten (3) gekuppelt ist und andererseits einen sich über ihre ganze Länge erstreckenden Mitnehmer aufweist,

und daß im Support (5) ausschließlich drehbar ein längs schiebbar aber drehfest mit dem Mitnehmer der Welle (16) in Eingriff stehendes Übertragungselement (17) gelagert ist, das mit einem Linearantrieb (19) am Hängeglied (6) in ständiger Antriebsverbindung steht (18).

2. Vorrichtung nach Anspruch 1,
   d a d u r c h   g e k e n n z e i c h n e t ,
   daß das Übertragungselement (17) aus mindestens einer
   Drehmomentbüchse besteht, die zugleich ein Längsführungselement für den Support (5) auf der Welle (16) bzw. am
   Ausleger (4) bildet.

3. Vorrichtung nach einem der Ansprüche 1 und 2,
   d a d u r c h   g e k e n n z e i c h n e t ,
   daß der drehantreibbare Teil der Drehmomentbüchse (17)
   mit einem Ritzel (18) verbunden ist, dieses vorzugsweise
   trägt, wobei das Ritzel (18) mit einer Zahnstange (19) am
   Hängeglied (6) ständig in Eingriff steht.

4. Vorrichtung nach einem der Ansprüche 1 bis 3,
   d a d u r c h   g e k e n n z e i c h n e t ,
   daß zwei parallele Wellen (16, 16') mit Übertragungselementen (17) im Ausleger (4) angeordnet sowie mit dem
   Support (5) in Wirkverbindung gehalten sind (17); Fig.
   3).

5. Vorrichtung nach einem der Ansprüche 1 bis 4,
   d a d u r c h   g e k e n n z e i c h n e t ,
   daß die beiden Wellen (16 und 16') für Synchronbewegung
   mit dem Antrieb (13) für das Hängeglied (6) gekuppelt
   sind.

6. Vorrichtung nach einem der Ansprüche 1 bis 5,
   d a d u r c h   g e k e n n z e i c h n e t ,
   daß das Hängeglied (6) aus zwei teleskopartig zueinander
   relativ verschiebbaren Längenabschnitten besteht, von
   denen jeder eine eigene Zahnstange (19) trägt, wobei jede
   Zahnstange (19) mit einem Übertragungselement (17) einer der beiden Wellen (16 und 16') in Eingriff steht, eobei vorzugsweise die Übersetzungsverhältnisse für die Antriebseingriffe beider Längenabschnitte des Hängegliedes (6) bei gleichen Drehrichtungen beider Wellen (16 und 16') unterschiedlich ausgelegt sind.

Fig. 1

Fig. 2

Fig. 3

20    24',24"    6    5

23',23"

16'    16

18

2|3

0241820

Fig. 4